# EUROPÄISCHE PATENTANMELDUNG

(11) **EP 4 485 729 A1**
(43) Veröffentlichungstag der Anmeldung: **01.01.2025**
(21) Anmeldenummer: 23181758.6
(22) Anmeldetag: 27.06.2023
(51) Int. Cl.: H02J 1/10, H02J 7/00

(54) **VERFAHREN ZUR STEUERUNG EINER ENERGIESPEICHEREINRICHTUNG UND ENERGIESPEICHEREINRICHTUNG**

(71) Anmelder: Siemens Mobility GmbH, 81739 München (DE); Rheinisch-Westfälische Technische Hochschule Aachen, 52056 Aachen (DE)
(72) Erfinder: FISCHER, Michael, 91320 Ebermannstadt (DE); SCHRICKER, Barbara, 91058 Erlangen (DE); STEINBACHER, Frank, 90542 Eckental (DE); BIHN, Stephan, 52062 Aachen (DE); KAISER, Nicolas, Aachen 52064 (DE); QUADE, Katharina, 47906 Kempen (DE)
(74) Vertreter: Siemens Patent Attorneys

(57) **Zusammenfassung**

Die Erfindung betrifft ein Verfahren zur Steuerung einer Energiespeichereinrichtung (1) umfassend wenigstens eine erste Teilspeichervorrichtung (2) in Form wenigstens eines Hochenergiespeichers (3) und wenigstens eine zweite Teilspeichervorrichtung (5) in Form wenigstens eines Hochleistungsspeichers (6), wobei die beiden Teilspeichervorrichtungen (2, 5) für einen bidirektionalen Energieaustausch miteinander verbunden sind, sowie eine den Betrieb der Energiespeichereinrichtung (1) steuernde Steuerungseinrichtung (11), wobei Energie bei extern benötigter Leistung entladen und Energie bei extern zugeführter Leistung geladen wird, wobei der Energieaustausch in Abhängigkeit eines vorbekannten oder prognostizierten Ladezustandsprofils, das zukünftige Entlade- und Ladevorgänge der Energiespeichereinrichtung (1) über die Zeit beschreibt, gesteuert wird.

## Beschreibung

Die Erfindung betrifft ein Verfahren zur Steuerung einer Energiespeichereinrichtung umfassend wenigstens eine erste Teilspeichervorrichtung in Form wenigstens eines Hochenergiespeichers und wenigstens eine zweite Teilspeichervorrichtung in Form wenigstens eines Hochleistungsspeichers, wobei die beiden Teilspeichervorrichtungen für einen bidirektionalen Energieaustausch miteinander verbunden sind, sowie eine den Betrieb der Energiespeichereinrichtung steuernde Steuerungseinrichtung, wobei Energie bei extern benötigter Leistung entladen und Energie bei extern zugeführter Leistung geladen wird.

Moderne Energiespeichereinrichtungen werden zunehmend als hybride Speichersysteme ausgelegt. Ein solches hybrides Speichersystem besteht aus zwei verschiedenen Typen von Energiespeichern, um die Stärken der einzelnen Typen miteinander zu kombinieren. Zumeist weist eine solche hybride Energiespeichereinrichtung eine erste Teilspeichervorrichtung in Form wenigstens eines Hochenergiespeichers und eine zweite Teilspeichervorrichtung in Form wenigstens eines Hochleistungsspeichers auf. Diese Kombination ermöglicht es, kurzzeitig hohe Leistungen in der Anwendung abzurufen, und bietet dennoch ein relativ kostengünstiges und kompaktes Gesamtsystem. Der Hochenergieanteil besteht aus kostengünstigeren Speichertypen, die eine hohe Energiedichte aufweisen, aber eher niedrige abrufbare Leistungen zur Verfügung stellen, wie beispielsweise Hochenergie-Batteriezellen, Brennstoffzellen etc. Der Hochleistungsanteil hingegen ermöglicht sehr hohe abrufbare Leistungen und besitzt meist auch eine gute zyklische Lebensdauer, hat aber eine generell geringere Energiedichte und ist meist teurer. Als Hochleistungsspeicher kommen beispielsweise Hochleistung-Batteriezellen oder Ultra/Super-Kondensatoren und Ähnliches zum Einsatz.

Um die Anforderungen einer gegebenen Anwendung optimal zu erfüllen, wird bisher die hybride Energiespeichereinrichtung auf die zu erwartende maximale Leistung, die vom Gesamtsystem abgerufen wird oder die es aufnehmen soll, ausgelegt. Hierbei ist zu berücksichtigen, dass ein Hochleistungsspeicher eine endliche Kapazität hat und diese Leistung daher nur für eine bestimmte Zeit zur Verfügung stellen kann. Dies muss bei der Auslegung berücksichtigt werden, was eine entsprechend dimensionierte Auslegung des Hochleistungsanteils bedeutet. Normalerweise wird folglich die Energiespeichereinrichtung so ausgelegt, dass sie sowohl die maximal benötigte Leistung bereitstellen kann als auch genügend Leistung während der in einem Nutzungsprofil vorgesehenen Zeiträume bereitstellt. Hieraus ergibt sich dann die maximal benötigte Kapazität des Hochleistungsspeichers. Die benötigte Gesamtleistung, die Grundlage für die Systemauslegung ist, ergibt sich aus einem Verlauf eines Nutzungsprofils, das die Leistungsanforderungen beschreibt.

Im Betrieb wird die aus der Energiespeichereinrichtung entnommenen bzw. in sie eingespeicherte Leistung so unterteilt, dass der Hochenergiespeicher möglichst ausgelastet wird, jedoch nicht über eine aus technischer oder wirtschaftlicher Sicht spezifizierte maximale Leistung hinausgeht. Die zusätzlich benötigte Leistung muss dann vom Hochleistungsspeicher aufgenommen bzw. abgegeben werden. Dabei ist es bekannt, dass ein Austausch von Energie zwischen den beiden Teilspeichervorrichtungen möglich ist, d. h., dass Energie vom Hochleistungsspeicher zum Hochenergiespeicher und umgekehrt übertragen werden kann, um beispielsweise die Ladungszustände anzugleichen.

Wie beschrieben, erfolgt die Auslegung der zweiten Teilspeichervorrichtung, also der Hochleistungsspeicherseite in Abhängigkeit der bereitzustellenden Gesamtleistung der Energiespeichereinrichtung, was eine entsprechend groß dimensionierte Auslegung des Hochleistungsspeichers erfordert. Dies ist jedoch mit hohen Kosten und einer entsprechenden räumlichen Größe des Hochleistungsspeichers verbunden.

Der Erfindung liegt das Problem zugrunde, ein verbessertes Verfahren zur Steuerung einer Energiespeichereinrichtung sowie eine verbesserte Energiespeichereinrichtung anzugeben.

Zur Lösung dieses Problems ist bei einem Verfahren der eingangs genannten Art erfindungsgemäß vorgesehen, dass der Energieaustausch in Abhängigkeit eines vorbekannten oder prognostizierten Ladezustandsprofils, das zukünftige Entladeund Ladevorgänge der Energiespeichereinrichtung über die Zeit beschreibt, gesteuert wird.

Das erfindungsgemäße Verfahren basiert sowohl auf einem Austausch von Energie zwischen den beiden Teilspeichervorrichtungen sowie einer Berücksichtigung eines vorbekannten oder prognostizierten Ladezustandsprofils, das zukünftige Entladeund Ladevorgänge der Energiespeichereinrichtung und damit der beiden Teilspeichervorrichtungen beschreibt.

Die dem Verfahren zugrunde liegende Energiespeichereinrichtung umfasst wenigstens eine erste Teilspeichervorrichtung in Form wenigstens eines Hochenergiespeichers und wenigstens eine zweite Teilspeichervorrichtung in Form wenigstens eines Hochleistungsspeichers. Unter einem Hochleistungsspeicher wird ein Speicher mit mindestens einer 2C-Rate verstanden. Die C-Rate beschreibt das Verhältnis der Entladegeschwindigkeit zur Speicherkapazität. Eine 1C-Rate bedeutet, dass eine vollständige Entladung des Speichers in 1 Stunde erfolgt. Eine 2C-Rate bedeutet demzufolge eine vollständige Entladung innerhalb von 30 Minuten. Je höher die C-Rate, desto leistungsfähiger ist der Hochleistungsspeicher. Vorliegend wird folglich unter einem Hochleistungsspeicher ein Speicher mit einer C-Rate ≥ 2 verstanden. Demzufolge wird unter einem Hochenergiespeicher ein Speicher mit einer C-Rate < 2 verstanden.

Zwischen beiden Teilspeichervorrichtungen wird bei Bedarf in beiden Richtungen Energie ausgetauscht, d. h., dass durch Entladen der einen Teilspeichervorrichtung das Ladeniveau der anderen Teilspeichervorrichtung erhöht werden kann. Diese bidirektionale Energieverteilung oder dieser bidirektionale Ladungsverschub erfolgt unter Berücksichtigung eines vorbekannten oder prognostizierten Ladezustandsprofils der Energiespeichereinrichtung. Dieses Ladezustandsprofil beschreibt den Verlauf des Ladezustands der beiden Teilspeichervorrichtungen über die Zeit, gibt also Auskunft über zukünftige Entlade- und Ladevorgänge der Energiespeichereinrichtung. Anhand dieses Ladezustandsprofils kann nun erkannt werden, wann vom System relativ wenig Leistung bereitzustellen ist, und wann eine hohe Leistung gefordert wird, also eine Lastspitze anliegt. In gleicher Weise kann so erkannt werden, ob im Ladefall über einen Zeitraum eine geringe Leistung oder eine hohe Leistung eingeladen wird. Wie bereits beschrieben, wird die in der Anwendung aus dem Gesamtsystem entnommene bzw. eingespeicherte Leistung so unterteilt, dass der Hochenergiespeicher möglichst ausgelastet wird, jedoch nicht über eine maximale Leistung hinaus. Die zusätzlich benötigte Leistung wird dann vom Hochleistungsspeicher abgegeben bzw. aufgenommen. Zu dieser generellen Betriebsstrategie wird nun zusätzlich die quasi einrichtungsinterne Leistungsübertragung, die in Abhängigkeit des Ladezustandsprofils erfolgt bzw. gesteuert wird, vorgesehen, die es erlaubt, je nach anstehender Betriebssituation, die aus dem Ladezustandsprofil erkannt werden kann, das Ladungsniveau im jeweiligen Speicher entsprechend anzupassen, wobei dies insbesondere in Bezug auf den Hochleistungsenergiespeicher, der innerhalb kurzer Zeit eine sehr hohe Leistung bzw. sehr viel Energie abgeben kann und in gleicher Weise in einer sehr kurzen Zeit eine sehr hohe Leistung bzw. viel Energie aufnehmen kann, gilt. Die einrichtungsinterne Ladungsverschiebung erlaubt es also, für einen anstehenden Entladebetrieb des Hochleistungsspeichers aus dem entsprechend geladenen Hochenergiespeicher vorbereitend Leistung in den Hochleistungsspeicher zu übertragen, der dann für die anstehende Entladestufe entsprechend geladen ist. Umgekehrt gilt im Ladebetrieb, dass bei hoher einzuladender Leistung der Hochleistungsspeicher angesprochen wird, also geladen wird, da in ihm sehr schnell sehr viel Leistung bezifferte Energie eingeladen werden kann, die dann, dem Ladezustandsprofil entsprechend, bei Bedarf in den Hochenergiespeicher umgeladen wird, um diesen wieder zu füllen bei gleichzeitiger Entladung des Hochleistungsspeichers zur Vorbereitung auf den nächsten anstehenden Ladezyklus. Es erfolgt also sowohl bezüglich des Entladens als auch des Ladens eine sich am Ladezustandsprofil orientierende Ladungsverteilung zwischen den beiden Teilenergiespeichern.

Bei bisher bekannten Energiespeichereinrichtungen werden beide Teilspeichervorrichtungen, also beide Speichertypen nur durch den externen Verbrauch bzw. die extern erzeugte Leistung entladen bzw. geladen. Das erfindungsgemäße Verfahren bzw. die erfindungsgemäße Strategie zum Energieaustausch zwischen den Teilspeichervorrichtungen basierend auf den Verlauf des Ladezustandsprofils ermöglicht hingegen eine verbesserte Auslegung der gesamten Energiespeichereinrichtung, was in einer kleineren Dimensionierung des Hochleistungsspeichers resultiert. Denn infolge der Möglichkeit, durch die interne Energieverteilung und damit die Variation des Ladungsniveaus der beiden Teilspeichervorrichtungen in Abhängigkeit des Ladezustandsprofils kann insbesondere der Ladezustand des Hochleistungsspeichers stets so angepasst werden, dass ein anstehender Entladevorgang bedient werden kann. Nach einem solchen Entladevorgang, zu dem die benötigte, zu entladene Energiemenge bekannt ist, folgt eine Betriebssituation, in der beispielsweise wieder weniger Energie bereitgestellt werden muss, was es wiederum erlaubt, intern Energie vom Hochenergiespeicher zum Hochleistungsspeicher zu transferieren, diesen also wieder aufzuladen und für einen nächsten Hochleistungs-Entladevorgang, zu dem viel Leistung abgerufen wird, vorzubereiten. Umgekehrt kann im Ladefall durch die erfindungsgemäße interne Umladungsstrategie erreicht werden, dass bei hoher einzuladender Energiemenge der Hochleistungsspeicher geladen wird, da in ihn eine hohe Energiemenge in sehr kurzer Zeit eingeladen werden kann. Schließt sich an diesen Ladefall wiederum eine Situation an, in der beispielsweise nur relativ wenig Energie eingeladen wird, so kann vom Hochleistungsspeicher Energie zum Hochenergiespeicher transferiert und dieser geladen werden, sodass der Hochleistungsspeicher wiederum für einen nachfolgend anstehenden Hochleistungs-Ladezyklus entladen und vorbereitet wird, um in diesem folgenden Ladezyklus wieder in kurzer Zeit viel Energie aufzunehmen.

Hieraus folgt, dass die Kapazität des Hochleistungsspeichers letztlich nur hinsichtlich der größten Entladestufe oder der größten Ladestufe, je nachdem, welche höher ist, innerhalb des Ladezustandsprofils auszulegen ist. Denn innerhalb eines Entlade- oder eines Ladezyklus wird der Hochleistungsspeicher maximal diese stufenbezogene Energiemenge abgeben oder einladen müssen. Denn zur Bedienung anderer Entlade- oder Ladestufen, die niedriger sind, kann der Hochleistungsspeicher durch das erfindungsgemäße Verfahren bzw. die erfindungsgemäße interne Energieverteilung stets entsprechend vorbereitet und in seinem Ladeniveau angepasst werden. Während im Stand der Technik der Hochleistungsspeicher wie beschrieben dahingehend ausgelegt wird, die gesamte, maximale Energiemenge, die der Hochleistungsspeicher in den entsprechenden Hochleistungsphasen abgeben oder aufnehmen muss, bereitstellen oder aufnehmen kann, erlaubt das erfindungsgemäße Verfahren eine deutlich kleinere Auslegung des Hochleistungsspeichers, da sie sich nur an der höchsten Entlade- oder Ladestufe innerhalb des Ladezustandsprofils orientiert.

In einer konkreteren Weiterbildung des erfindungsgemäßen Verfahrens kann vorgesehen sein, dass im Ladezustandsprofil Entladestufen und Ladestufen ermittelt werden, wobei eine Entladestufe einen ersten Entladeabschnitt und einen zweiten Entladeabschnitt aufweist, wobei in dem ersten Entladeabschnitt die extern benötigte Leistung geringer ist als in dem zweiten Entladeabschnitt und wobei eine Ladestufe einen ersten Ladeabschnitt und einen zweiten Ladeabschnitt aufweist, wobei in dem ersten Ladeabschnitt die extern zugeführte Leistung geringer ist als in dem zweiten Ladeabschnitt, wobei zumindest während eines Teils der Dauer eines ersten Entladeabschnitts Energie von dem Hochenergiespeicher an den Hochleistungsspeicher übertragen wird, und zumindest während eines Teils der Dauer eines ersten Ladeabschnitts Energie vom Hochleistungsspeicher an den Hochenergiespeicher übertragen wird. Das Ladezustandsprofil wird folglich hinsichtlich des Vorhandenseins von Entladestufen und Ladestufen ausgewertet, um anhand des Stufenverlaufs Phasen, in denen wenig Energie über längere Zeit zu entladen ist, und Phasen, in denen in kurzer Zeit viel Energie zu entladen ist, bzw. Phasen, in denen wenig Energie über längere Zeit geladen wird, und Phasen, in denen in kurzer Zeit viel Energie geladen wird, zu ermitteln.

Dabei zeichnen sich die Entladestufen und die Ladestufen durch entsprechende Abschnitte bzw. Flanken aus, die die entsprechenden Phasen definieren. Eine Entladestufe weist einen ersten Entladeabschnitt und einen zweiten Entladeabschnitt auf. In dem ersten Entladeabschnitt ist die extern benötigte Leistung relativ gering, sie kann aus dem Hochenergiespeicher bedient werden. Der erste Entladeabschnitt entspricht demzufolge einem flachen Abschnitt innerhalb der Kurve des Ladezustandsprofils. Im zweiten Entladeabschnitt hingegen wird innerhalb kurzer Zeit viel Energie benötigt, die dann vom Hochleistungsspeicher bereitgestellt wird. Dieser zweite Entladeabschnitt entspricht demzufolge einem steilen Abschnitt, also einer steileren Flanke innerhalb der Kurve des Ladezustandsprofils. Eine Ladestufe weist entsprechend einen ersten Ladeabschnitt und einen zweiten Ladeabschnitt auf. In dem ersten Ladeabschnitt ist die extern zugeführte, also einzuladende Leistung gering. Die Ladung kann entweder direkt in den Hochenergiespeicher geladen werden, oder, sofern möglich, in den Hochleistungsspeicher. In jedem Fall erfolgt im ersten Ladeabschnitt ein Energietransfer vom Hochleistungsspeicher in den Hochenergiespeicher, sodass der Hochleistungsspeicher hierbei wieder zumindest teilweise entleert wird. Dieser erste Ladeabschnitt entspricht demzufolge einem flachen Abschnitt innerhalb der Kurve des Ladezustandsprofils. In einem folgenden zweiten Ladeabschnitt, in dem die zugeführte externe Leistung hoch ist und innerhalb kurzer Zeit geladen werden muss, wird die externe Leistung in den entladenen Hochleistungsspeicher geladen, der durch die vorherige Entladung hierauf vorbereitet wurde. Dieser zweite Ladeabschnitt entspricht demzufolge einem steileren Abschnitt, also einer steileren Flanke innerhalb der Kurve des Ladezustandsprofils. Der Hochleistungsspeicher ist in der Lage, jeweils sehr schnell eine hohe Energiemenge abzugeben und aufzunehmen, daher wird er im steilen Abschnitt der Entladestufe entladen und im steilen Abschnitt der Ladestufe geladen. Durch die entsprechenden internen Energieverschübe kann demzufolge der Hochleistungsspeicher stets optimal auf anstehende Hochleistungsphasen sowohl hinsichtlich des Entladens als auch des Ladens vorbereitet werden.

Wie beschrieben, wird das Ladezustandsprofil hinsichtlich gegebener Entlade- und Ladestufen analysiert und ausgewertet, wobei der Stufenverlauf der Steuerung der internen bidirektionalen Energieübertragung zugrunde liegt. Die Ermittlung einer entsprechenden Stufe erfolgt über die Erfassung der entsprechenden ersten und zweiten Entladeabschnitte bzw. der ersten und zweiten Ladeabschnitte. Dabei kann dies derart erfolgen, dass im ersten Entladeabschnitt die extern benötigte Leistung kleiner als ein erster Grenzwert ist, und im zweiten Entladeabschnitt die extern benötigte Leistung größer als der erste Grenzwert ist, und dass im ersten Ladeabschnitt die extern zugeführte Leistung kleiner als ein zweiter Grenzwert ist, und im zweiten Ladeabschnitt die extern zugeführte Leistung größer als der zweite Grenzwert ist. Der Kurvenverlauf wird demgemäß hinsichtlich einer Grenzwertbetrachtung analysiert. Die Differenzierung zwischen einem ersten Entladeabschnitt und einem zweiten Entladeabschnitt erfolgt anhand eines ersten Grenzwerts, wobei geprüft wird, ob eine extern benötigte Leistung kleiner ist als ein erster Grenzwert oder größer ist als dieser erste Grenzwert. Ist die benötigte Leistung bzw. die benötigte Energie kleiner als der Grenzwert, so ist ein entsprechend flacher Kurvenverlauf gegeben, der einem ersten Entladeabschnitt entspricht. Ist die benötigte Leistung größer als der Grenzwert, so ist ein entsprechend steiler Kurvenverlauf gegeben, der einem zweiten Entladeabschnitt entspricht. In gleicher Weise wird eine Ladungsstufe charakterisiert. Hier wird der Betrachtung ein zweiter Grenzwert zugrunde gelegt. Ist die von extern zugeführte Leistung kleiner als der zweite Grenzwert, ist der Kurvenverlauf entsprechend flach, es liegt ein erster Ladeabschnitt vor. Ist hingegen die extern zugeführte Leistung größer als der Grenzwert, ist ein steiler Kurvenverlauf und demzufolge ein zweiter Ladeabschnitt gegeben. Dabei kann in einem entsprechenden ersten Entladeabschnitt oder zweiten Ladeabschnitt nach wie vor eine geringe Leistung entladen bzw. geladen werden, d. h., dass die Kurve in dem jeweiligen Abschnitt leicht fallen oder steigen kann. Das Entladen bzw. Laden erfolgt nur relativ langsam, verglichen mit der Geschwindigkeit des Entladens oder Ladens in einem zweiten Entladeabschnitt oder zweiten Ladeabschnitt. Auch kann es, beispielsweise an entsprechenden Stufenkanten, zu einem leichten Überschwingen kommen, d. h., dass kurzzeitig ein Wechsel von einem Entladen hin zu einem Laden gegeben ist, oder umgekehrt. Als Grenzwert kann z.B. ein Leistungsgrenzwert angenommen werden, oder ein anderer Grenzwert, der in geeigneter Weise den Entlade- oder die Ladevorgang über die Zeit beschreibt.

Alternativ zur der Stufenerfassung in Abhängigkeit der beschriebenen Grenzwertbetrachtung ist es auch denkbar, den Verlauf der Ladezustandskurve über einen Algorithmus auszuwerten, in den entsprechende auswählte Parameter eingehen, um anhand dieser Algorithmus basierten Auswertung die Stufen zu bestimmen.

Findet eine Grenzwertbetrachtung statt, so ist es denkbar, dass der erste und der zweite Grenzwert gleich sind. Es ist aber auch denkbar, bei Bedarf unterschiedliche Grenzwert anzusetzen, wenn die Performance der Teilspeichervorrichtungen, insbesondere der zweiten Teilspeichervorrichtung, also des Hochleistungsspeichers, sich im Entladefall vom Ladefall unterscheidet.

Zweckmäßig ist es, wenn der Hochleistungsspeicher in einem ersten Entladeabschnitt nur auf einen oberhalb seines Minimalladewerts liegenden ersten Ladewert entladen wird, und/oder wenn der Hochleistungsspeicher in einem ersten Ladeabschnitt nur auf einen unterhalb seines Maximalladewerts liegenden zweiten Ladewert geladen wird. Es erfolgt also keine vollständige Entladung des Hochleistungsspeichers und/oder keine vollständige Beladung des Hochleistungsspeichers. Vielmehr verbleibt im Entladefall stets eine gewisse Restlademenge im Hochleistungsspeicher, die es ermöglicht, im Bedarfsfall noch kurzzeitig Leistung bzw. Energie bereitzustellen. Im Ladefall wird nicht vollständig aufgeladen, was es ermöglicht, im Bedarfsfall noch kurzzeitig Leistung bzw. Energie aufzunehmen. Durch diese Vorgehensweise ist stets ein gewisser Puffer gegeben, wenn es zu einem Überschwinger z.B. am Ende einer Entladestufe kommt, wenn also kurzzeitig von extern Energie zugeführt wird, oder wenn am Ende einer Ladestufe kurzzeitig eine Entladung gegeben ist, die aus den Hochleistungsspeicher bedient werden kann.

Dabei sollte der erste Ladewert, bis zu dem der Hochleistungsspeicher maximal entladen wird, wenigstens 10%, bevorzugt wenigstens 20% des Maximalladewerts entsprechen. Ferner sollte der zweite Ladewert, bis zu dem der Hochleistungsspeicher höchstens aufgeladen wird, 90%, bevorzugt höchstens 80% des Maximalladewerts entsprechen.

In einer weiteren Erfindungsausgestaltung kann vorgesehen sein, dass die Energiespeichereinrichtung Teil eines Fahrzeugs ist, wobei das vorbestimmten Ladezustandsprofil anhand von Navigationsdaten einer gewünschten Fahrstrecke bestimmt wird, oder anhand einer vorbekannten Fahrstrecke bestimmt wird. In einem solchen Anwendungsfall können Entladestufen durch Beschleunigungsvorgänge des Kraftfahrzeugs gegeben sein, während Ladestufen während einer Rekuperationsphase bei einer Bergabfahrt gegeben sein können. Eine Voraussage des Ladezustandsprofil kann sich aus den Navigationsdaten, über die eine gewünschte Fahrstrecke beschrieben wird, ergeben. Ein weiterer Anwendungsfall sind Traktionsbatterien in öffentlichen Transportmitteln. Hier ergeben sich Entladestufen ebenfalls durch Beschleunigungsvorgänge im Batteriebetrieb ohne Ladestopps. Ladestufen können entstehen, wenn das Transportmittel an Haltestationen kurzzeitig geladen werden kann. Zusätzlich kann der Speicher auch während der Fahrt bei Rekuperation geladen werden. Die Entladung des Hochleistungsspeichers kann beispielsweise bei hoher oder maximaler Geschwindigkeit während der Fahrt erfolgen, bevor der Haltestopp erreicht wird. Bei einer vorbekannten Fahrstrecke ist das Ladezustandsprofil sehr gut ermittelbar. Auch bei Zügen kann der Speicher auch dann während der Fahrt geladen werden, sofern eine elektrische Oberleitung vorhanden ist, durch die Strom bezogen werden kann.

In einer wiederum weiteren Erfindungsausgestaltung kann vorgesehen sein, dass die Energiespeichereinrichtung stationär ist, wobei das Ladezustandsprofil anhand der Betriebszeiten bekannter, temporär zu versorgender Verbraucher und/oder anhand von Wetterdaten, die ein Maß für die Erzeugung erneuerbarer Energie sind, bestimmt wird. Hier wird die Energiespeichereinrichtung stationär betrieben. Entladestufen können entstehen, wenn zwischendurch leistungsstarke Verbraucher betrieben werden und versorgt werden müssen. Ladestufen können entstehen, wenn die Energiespeichereinrichtung z.B. durch erneuerbare Energien punktuell deutlich stärker geladen wird als Energie verbraucht wird. Eine Vorhersage des Ladezustandsprofils kann beispielsweise über Wetter- und Nutzungsdaten erfolgen.

Neben dem Verfahren betrifft die Erfindung ferner eine Energiespeichereinrichtung, umfassend wenigstens eine erste Teilspeichervorrichtung in Form wenigstens eines Hochenergiespeichers und wenigstens eine zweite Teilspeichervorrichtung in Form wenigstens eines Hochleistungsspeichers, wobei ein die beiden Teilspeichervorrichtungen für einen bidirektionalen Energieaustausch miteinander verbunden sind, sowie eine den Energieaustausch steuernde Steuerungseinrichtung, die zur Durchführung des Verfahrens nah einem der vorangehenden Ansprüche eingerichtet ist. Die Steuerungseinrichtung ist demzufolge softwaretechnisch entsprechend eingerichtet und in der Lage, die Energiespeichereinrichtung respektive die beiden Teilspeichervorrichtungen erfindungsgemäß zu steuern und auch das Ladezustandsprofil entsprechend auszuwerten.

Dabei ist erfindungsgemäß bevorzugt die Kapazität des Hochleistungsenergiespeichers in Abhängigkeit der Höhe der höchsten Entladestufe oder der höchsten Ladestufe ausgelegt. Wie beschrieben, muss aufgrund der erfindungsgemäßen, bidirektionalen und in Abhängigkeit des Ladezustandsprofils gesteuerten Energieverteilung zwischen den beiden Teilspeichervorrichtungen die zweite Teilspeichervorrichtung, also der Hochleistungsspeicher, letztlich nur in Bezug auf die höchste Entladestufe oder die höchste Ladestufe, in welcher auch immer der jeweils höchste Energiedurchsatz gegeben ist, ausgelegt werden. Wenn das Ladezustandsprofil viele kleinere Stufen hat, dann kann der Hochleistungsspeicher entsprechen klein ausgelegt werden. Er muss also grundsätzlich nicht, wie im Stand der Technik gegeben, hinsichtlich seiner Kapazität mindestens der Summe aller Entladestufen oder Ladestufen, welche Summe auch immer die größere ist, ausgelegt werden.

Die Energiespeichereinrichtung selbst kann Teil eines Fahrzeugs sein, sie kann aber auch als stationärer Speicher eingesetzt werden.

Weitere Vorteile und Einzelheiten der vorliegenden Erfindung ergeben sich aus den im folgenden beschriebenen Ausführungsbeispiel sowie anhand der Zeichnungen. Dabei zeigen:
- Fig. 1: eine Prinzipdarstellung einer erfindungsgemäßen Energiespeichereinrichtung,
- Fig. 2: eine Prinzipdarstellung eines Ladezustandsprofils, und
- Fig. 3: das Ladezustandsprofil aus Fig. 2 mit dargestellten Ladeniveaus des Hochenergiespeichers und des Hoch-leistungsspeichers.

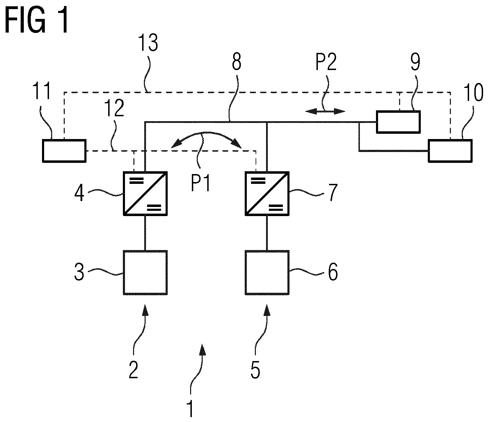

Fig. 1 zeigt eine Prinzipdarstellung einer erfindungsgemäßen Energiespeichereinrichtung 1. Diese umfasst wenigstens eine erste Teilspeichervorrichtung 2 in Form wenigstens eines Hochenergiespeichers 3 mit zugeordnetem DC/DC-Wandler 4, sowie wenigstens eine zweite Teilspeichervorrichtung 5 umfassend eine Hochleistungsspeicher 6 mit zugeordnetem DC/DC-Wandler 7. Über eine DC-Bus 8 ist ein oder sind mehrere Energieverbraucher 9 sowie ein oder mehrere Energieerzeuger 10 an die Energiespeichereinrichtung 1 angeschlossen. Bei den Verbrauchern 9 kann es sich je nach Einsatzgebiet der Energiespeichereinrichtung 1 um beliebige Stromverbraucher verhandeln, beispielsweise bei Verwendung der Energiespeichereinrichtung 1 in einem Kraftfahrzeug um fahrzeugseitig vorgesehene Verbraucher wie Elektromaschinen, Heizeinrichtungen und ähnliches. Im Falle einer stationären Energiespeichereinrichtung kann es sich um über die Energiespeichereinrichtung 1 versorgte Vorrichtungen wie Maschinen und dergleichen handeln. Bei dem oder den Energieerzeugern 10 kann es sich ebenfalls je nach Einsatzgebiet der Energiespeichereinrichtung 1 um beliebige Energieerzeuger handeln, beispielsweise bei Verwendung in einem Kraftfahrzeug um eine elektrische Maschine oder eine elektrische Oberleitung im Falle einer Anwendung in einem Zug oder im Falle einer Verwendung als stationäre Energiespeichereinrichtung um Erzeuger regenerativer Energie wie Solarzellen, Windkraftanlagen und ähnliches.

Des Weiteren vorgesehen ist eine Steuerungseinrichtung 11 als Teil der Energiespeichereinrichtung 1. Über diese wird der Betrieb der Energiespeichereinrichtung 1 gesteuert, also das Entladen und Laden der Teilspeichervorrichtungen 2, 5. Über die Steuerungseinrichtung 11 wird auch ein bidirektionale Energietransfer von der Teilspeichervorrichtung 2 zur Teilspeichervorrichtung 5 und umgekehrt gesteuert, wobei über diesen bidirektionalen Energietransfer das Ladungsniveau im Hochenergiespeicher 3 sowie im Hochleistungsspeicher 6 adaptiert werden kann. Diese Adaption erfolgt in Abhängigkeit eines Ladezustandsprofils, das der Steuerungseinrichtung 11 bekannt ist und das ausgewertet wird. Das Ladezustandsprofil gibt als Nutzungsprofile den Verlauf des Ladezustands des Gesamtsystems, also der Energiespeichereinrichtung 1 insgesamt, an, wobei sich der Ladezustand aus Entladungen und Aufladungen des Hochenergiespeichers 3 sowie des Hochleistungsspeichers 6 zusammensetzt. Die Änderungen der Ladezustände der beiden Teilspeichervorrichtungen 2, 5, also der beiden Speicheranteile aus Hochenergiespeicher 3 und Hochleistungsspeicher 6 ergeben sich je nach geforderter Leistung und wie diese aus dem Hochenergiespeicher 3 und dem Hochleistungsspeicher 6 bedient wird. Üblicherweise wird die aus der Energiespeichereinrichtung 1 entnommene bzw. eingespeicherte Leistung bzw. Energie so unterteilt, dass der Hochenergiespeicher 3 möglichst ausgelastet wird, jedoch nicht über eine aus technischer oder wirtschaftlicher Sicht spezifizierte maximale Leistung hinausgeht. Die zusätzlich benötigte Leistung bzw. Energie wird dann vom Hochleistungsspeicher 6 abgegeben oder aufgenommen. Zur Steuerung der Teilspeichervorrichtungen 2, 5 ist die Steuerungseinrichtung 11 über eine Steuerverbindung 12 mit den Teilspeichervorrichtungen 2, 5 verbunden.

Wie beschrieben, erfolgt die Steuerung der Teilspeichervorrichtungen 2, 5 hinsichtlich des internen Energieaustausch zur Adaption des Ladungsniveaus in Abhängigkeit eines Ladezustandsprofils. In dem Ladezustandsprofil ist, worauf nachfolgend eingegangen wird, über eine Kurve der sich über die Zeit ergebende Ladezustand des Gesamtsystems aufgetragen. Um dieses Ladezustandsprofil zu erfassen, kommuniziert die Steuerungseinrichtung 11 über eine weitere Kommunikationsleitung 13 mit dem oder den Energieverbrauchern 9 sowie dem oder den Energieerzeugern 10, die, wie durch den Pfeil P2 gezeigt, im Falle der Energieverbraucher 9 Energie aus der Energiespeichereinrichtung 1 erhalten bzw. im Falle der Energieerzeuger 10 Energie der Energiespeichereinrichtung 1 zuführen. Die Steuerungseinrichtung 11 ist nun derart eingerichtet, dass sie, neben der Steuerung des allgemeinen Entlade- und Ladebetriebs, zusätzlich auch den bidirektionalen Energieaustausch gemäß Pfeil P1 in Abhängigkeit des Ladezustandsprofils vornehmen kann.

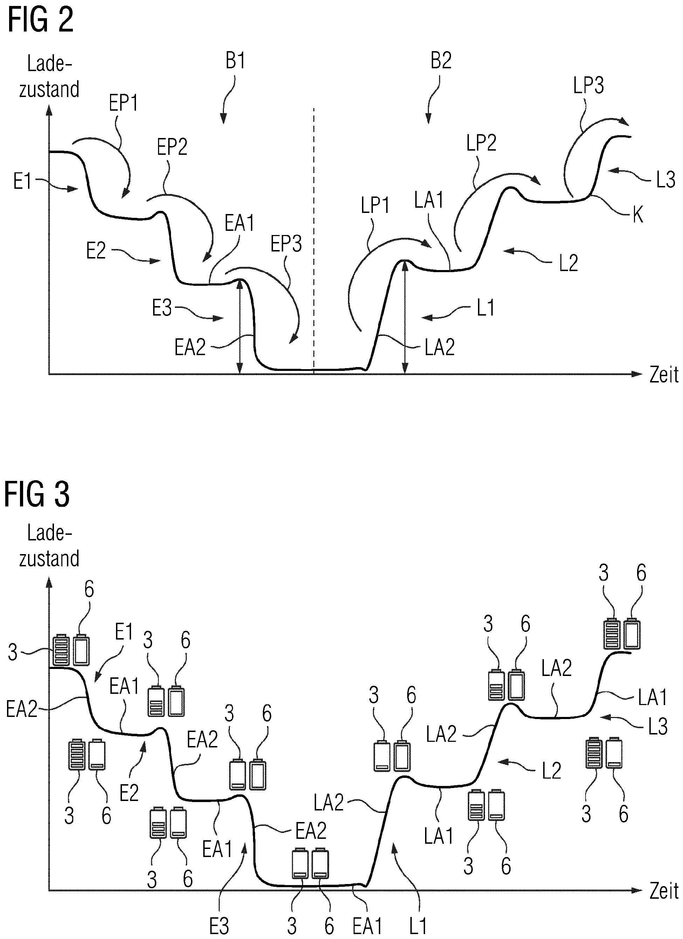

Fig. 2 zeigt in einer Prinzipdarstellung ein Ladezustandsprofil anhand einer Ladezustandskurve K dar. Längs der Abszisse ist die Zeit aufgetragen (z.B. in Stunde), längs der Ordinate der Ladezustand (z.B. in Ah oder %), wobei, wie beschrieben, die Kurve K den Ladezustand des Gesamtsystems, also beider Teilspeichervorrichtungen 2, 5 angibt. Die Kurve K zeigt einen stufenförmigen Verlauf, der exemplarisch in zwei Bereiche B1 und B2 unterteilt ist. Der Bereich B1 zeigt einen Bereich mit mehreren Entladestufen an, was sich daraus ergibt, dass der Ladezustand von einem entsprechend hohen Niveau auf ein sehr niedriges Niveau sinkt. Der Bereich B2 zeigt einen Bereich mit mehreren Ladestufen an, was sich daraus ergibt, dass der Ladezustand von einem entsprechend niedrigen Niveau auf ein hohes Niveau steigt.

In jedem Bereich B1, B2 sind entsprechende Entladestufen und Ladestufen gezeigt. Im Bereich B1 sind drei Entladestufen E1, E2 und E3 gezeigt, während im Bereich B3 drei Ladestufen L1, L2 und L3 gezeigt sind. Über die gezeigten Entladepfeile EP1, EP2 und EP3 ist die stufenförmige Entladung dargestellt, während über die Pfeile LP1, LP2 und LP3 die stufenförmige Beladung der Energiespeichereinrichtung 1 dargestellt ist.

Jede Entladestufe E1, E2 und E3 wird über einen ersten Entladeabschnitt EA1 und einen zweiten Entladeabschnitt EA2 charakterisiert, wobei der erste und der zweite Entladeabschnitt EA1, EA2 nur bezüglich der dritten Entladestufe E3 dargestellt ist, sich aber aufgrund der Stufenform der jeweiligen Entladestufe bei allen Entladestufen wiederfindet. Ersichtlich ist der jeweilige erste Entladeabschnitt EA1 sehr flach, die Steigung ist gering, d. h., dass die jeweiligen Entladestufe in diesem Bereich mit dem ersten Entladeabschnitt eine flache Flanke aufweist. Demgegenüber ist der jeweilige zweite Entladeabschnitt EA2 sehr steil, die Steigung ist groß, d. h., dass die jeweilige Entladestufe in diesem Bereich mit dem zweiten Entladeabschnitt eine steile Flanke aufweist. Im ersten Entladeabschnitt EA1 findet demzufolge über einen längeren Zeitraum, also eine längere Phase nur eine geringe Entladung statt, wobei es, wenn keine Leistung gezogen wird, durchaus auch kurzzeitig zu einem Überschwingen und einem kurzzeitigen Zuführen von Leistung kommt. Demgegenüber findet im zweiten Entladeabschnitt EA2 eine hohe Energieabgabe in sehr kurzer Zeit statt, wie die Steilheit dieses Abschnitts zeigt. In entsprechender Weise ist jede Ladestufe L1, L2 und L3 über einen ersten Ladeabschnitt LA1 und einen zweiten Ladeabschnitt LA2 charakterisiert, wobei der erste und der zweite Ladeabschnitt LA1, LA2 nur bezüglich der ersten Ladestufe L1 dargestellt ist, sich aufgrund der Stufenform der jeweiligen Ladestufe aber in allen Ladestufen wiederfinden. Ersichtlich ist der jeweilige erste Ladeabschnitt LA1 sehr flach, die Steigung ist gering, d. h., dass die jeweilige Ladestufe in diesem Bereich mit dem ersten Ladeabschnitt eine flache Flanke aufweist. Demgegenüber ist der jeweilige zweite Ladeabschnitt L2 sehr steil, die Steigung ist groß, d. h., dass die jeweilige Ladestufe in diesem Bereich mit dem zweiten Ladeabschnitt eine steile Flanke aufweist. Im ersten Ladeabschnitt LA1 findet demzufolge über einen längeren Zeitraum, also eine längere Phase nur eine geringe Ladung statt, es wird also nur relativ wenig Energie von extern zugeführt, wobei es, wenn keine Energie zugeführt wird, durchaus auch kurzzeitig zu einem Überschwingen und einem kurzzeitigen entladen kommen kann. Demgegenüber findet im zweiten Ladeabschnitt LA2 eine hohe Energiezufuhr in sehr kurzer Zeit statt, wie die Steilheit dieses Abschnitts zeigt.

Die Steuerungseinrichtung 11 ist nun in der Lage, ein ihr vorliegendes Ladezustandsprofil, das von Haus aus vorbekannt sein kann, oder das in situ ermittelt wird, hinsichtlich des Vorhandenseins der entsprechenden Entladestufen E1, E2, E3 sowie der entsprechenden Ladestufen L1, L2, L3 zu analysieren, und die entsprechenden ersten und zweiten Entladeabschnitte EA1, EA2 sowie die ersten und zweiten Ladeabschnitte LA1, LA2 zu erfassen, wie auch deren potentielle Zeitdauer zu bestimmen. Anhand dieser Kenntnis ist die Steuerungseinrichtung 11 nun in der Lage, den internen Energieaustausch zwischen den beiden Teilspeichervorrichtungen 2, 5 zu steuern, unabhängig davon, dass die jeweilige im Ist-Zeitpunkt benötigte Energie oder zugeführte Energie stets entsprechend bereitgestellt beziehungsweise geladen wird.

Fig. 3 zeigt das Ladezustandsprofil aus Fig. 2, wobei zusätzlich jeweils der Hochenergiespeicher 3 sowie der Hochleistungsspeicher 6 gezeigt sind, wie auch deren jeweiliges Ladungsniveau, das durch die jeweils gezeigte Auffüllung des jeweiligen Speichers dargestellt ist. Zu Beginn der Kurve, also zu Beginn der Entladestufe E1, sind der Hochenergiespeicher 3 und der Hochleistungsspeicher 6 vollständig geladen. Wie die Kurve K zeigt, schließt sich ein zweiter Entladeabschnitt EA2 an, mit einer steilen Flanke, was bedeutet, dass in diesem kurzen Zeitraum aus dem Hochleistungsspeicher 6 viel Energie gezogen wird. Dies zeigt sich darin, dass am Ende der steilen Flanke gemäß Entladeabschnitt EA2 der Hochleistungsspeicher 6 weitestgehend entleert ist, während der Hochenergiespeicher 3 noch voll geladen ist. Es schließt sich nun als Teil der Entladestufe 2 ein erster Entladeabschnitt EA1 an, indem dem System relativ wenig Energie entzogen wird. In diesem Zeitraum wird die bereitzustellende Energie aus dem Hochenergiespeicher 3 bereitgestellt. Gleichzeitig wird über eine internen Energietransfer gemeistert Pfeil P1 aus Fig. 1 Energie aus dem Hochenergiespeicher 3 in den Hochleistungsspeicher 6 übertragen, sodass dieser am Ende des Entladeabschnitts EA1 wieder vollständig geladen ist. Gleichzeitig ist der Hochenergiespeicher 3 aufgrund dieses internen Energietransfer bereits teilweise entladen.

Als Teil der zweiten Entladestufe E2 schließt sich nun wiederum ein zweiter Entladeabschnitt EA2, also eine steile Flanke an. Hier erfolgt wieder eine Entladung des Hochleistungsspeichers 6 in sehr kurzer Zeit. Am Ende dieses zweiten Entladeabschnitts EA2 der zweiten Entladestufe E2 ist der Hochleistungsspeicher 6 erneut weitestgehend entladen, wie durch das geringe Ladeniveau dargestellt ist. Es schließt sich nun als Teil der dritten Entladestufe wiederum ein erster Entladeabschnitt EA1 an, die Kurve ist wieder sehr flach. Über diesen längeren Zeitraum wird nun wiederum Energie vom Hochenergiespeicher 3 intern in den Hochleistungsspeicher 6 transferiert, bis dieser am Ende des ersten Entladeabschnitts EA1 wieder nahezu vollständig geladen ist. Der Hochenergiespeicher 3 ist in diesem Zeitpunkt weitgehend entladen.

Als weitere Teil der dritten Entladestufe E3 schließt sich nun wieder ein steiler Flankenabschnitt mit dem zweiten Entladeabschnitt EA2 an. Hier wird wieder aus dem geladenen Hochleistungsspeicher 6 in sehr kurzer Zeit viel Energie entladen, bis die Kurve K am Ende des zweiten Entladeabschnitts EA2, also am Ende der dritten Entladestufe die in eine weiteren Entladeabschnitt EA1 übergeht, in dem nahezu keine Energie entladen wird, er verläuft nahezu horizontal. Ersichtlich sind der Hochenergiespeicher 3 und der Hochleistung Speicher 6 Beide nahezu vollständig entladen.

An den letzten Entladeabschnitt schließt sich nun die erste Ladestufe L1 an, und zwar mit einem zweiten Ladeabschnitt LA2 als Teil der ersten Ladestufe 1. Dieser zweite Ladeabschnitt LA2 weist eine sehr steile Flanke auf, d. h., dass sehr viel Energie in sehr kurzer Zeit eingeladen wird. Hierzu ist der Hochleistungsspeicher 6 in der Lage, er kann neben einem sehr schnellen Entladen auch sehr schnell geladen werden. Am Ende des zweiten Ladeabschnitt LA2 ist der Hochleistungsspeicher 6 wieder nahezu vollständig geladen, während der Hochenergiespeicher 3 nach wie vor das sehr geringen Ladeniveau wie am untersten Kurvenabschnitt gemäß EA1 besitzt. Es schließt sich nun als Teil der ersten Ladestufe L1 ein erster Ladeabschnitt LA1 an, indem relativ wenig Energie zugeführt wird. Diese Phase wird genutzt, um aus den Hochleistungsspeicher 6 Energie intern in den Hochenergiespeicher 3 zu transferieren. Am Ende des ersten Ladeabschnitts LA1 ist ersichtlich der Hochleistungsspeicher 6 wieder weitgehend entladen, während der Hochenergiespeicher 3 zumindest teilweise geladen ist.

Die teilweise Entladung des Hochleistungsspeicher 6 erlaubt es nun, in dem nachfolgenden zweiten Ladeabschnitt LA2 der zweiten Ladestufe L2 wieder viel von extern zugeführte Energie in den entladenen Hochleistungsspeicher 6 einzuladen. Am Ende des zweiten Ladeabschnitt LA2 der zweiten Ladestufe L2 ist ersichtlich der Hochleistungsspeicher 6 wieder nahezu vollständig geladen, während der Hochenergiespeicher 3 nach wie vor teilweise geladen ist. Es schließt sich nun wiederum ein erster Ladeabschnitt LA1 an, als Teil der dritten Ladestufe L3. Dieser erste Ladeabschnitt LA1 wird wieder genutzt, um Energie aus dem Hochleistungsspeicher 6 intern in den Hochenergiespeicher 3 zu transferieren. Am Ende des ersten Ladeabschnitt LA1 ist wiederum der Hochleistungsspeicher 6 weitestgehend entladen, während der Hochenergiespeicher 3 nahezu vollständig geladen ist. In dem daran anschließenden zweiten Ladeabschnitt LA2 mit der steilen Flanke wird wieder in sehr kurzer Zeit sehr viel Energie zugeführt, die im Teil entladenen Hochleistungsspeicher 6 sofort in entsprechende Menge eingeladen werden kann, sodass am Ende des zweiten Ladeabschnitts LA2 der dritten Ladestufe L3 der Hochleistungsspeicher 6 ebenfalls wieder voll geladen ist, wie auch der Hochenergiespeicher 3.

Aus Fig. 3 ist also ersichtlich, dass durch die interne Energieverteilung zwischen Hochenergiespeicher 3 und Hochleistungsspeicher 6 in bidirektionaler Weise der Hochleistungsspeicher 6 stets für eine anstehende Hochleistungsphase vorbereitet wird. Entweder wird er in einer Entladestufe durch Energietransfer vom Hochenergiespeicher 3 weitestgehend geladen, sodass für die anstehende steile Entladeflanke, also den Entladeabschnitt EA2, ausreichend Energie zur Verfügung steht. Oder er wird in einer Ladestufe durch Energietransfer in den Hochenergiespeicher 3 weitestgehend entladen, sodass für die anstehende steile Ladeflanke, also den Ladeabschnitt LA2, ausreichend Speicherkapazität zur Verfügung steht. Die Adaption des jeweiligen Ladungsniveaus des Hochleistungsspeicher 6 erfolgt also in Abhängigkeit des stufenförmigen Kurvenverlaufs des Ladezustandsprofils.

Durch diesen internen Energieaustausch und die jeweilige Vorbereitung des Hochleistungsspeichers 6 an die anstehende Hochleistungsphase, sei es eine Entladung, sei es eine Beladung, kann der Hochleistungsspeicher 6 demzufolge entsprechend optimiert ausgelegt werden. Denn seine Kapazität ist letztlich nur in Abhängigkeit entweder der größten Entladestufe oder der größten Ladestufe, welche von beiden auch immer größer ist, auszulegen. Im gezeigten Beispiel muss die Kapazität des Hochleistungsspeichers 6 mindestens so sein, dass die in der Ladestufe L1, die die größte aller Stufen ist, einzuladen Energiemenge aufgenommen werden kann. Eine Auslegung der Kapazität hinsichtlich einer Summe aller Entladestufen oder aller Ladestufen, welche Summe auch immer am größten ist, welche Auslegung im Stand der Technik bisher üblich ist, ist vorliegend vorteilhaft nicht erforderlich, was die Verwendung eines deutlich kleiner dimensionierten und damit kostengünstigeren und weniger Raum einnehmen den Hochleistungsspeichers 6 erlaubt.

Die Ermittlung eines ersten und zweiten Entladeabschnitt EA1, EA2 bzw. eines ersten und zweiten Ladeabschnitts LA1, LA2 kann in Abhängigkeit einer Grenzwertbetrachtung erfolgen. Ein erster Entladeabschnitt EA1 ist dann gegeben, wenn die in einem betrachteten Zeitraum erfolgende zu entnehmende Leistung geringer als ein erster Grenzwert ist, während ein zweiter Entladeabschnitt EA2 gegeben ist, wenn die in den betrachteten Zeitraum erfolgende zu entnehmende Leistung größer als der erste Grenzwert ist. In ähnlicher Weise erfolgt die Grenzwerte basierte Bestimmung der Ladeabschnitte. Ein erster Ladeabschnitt ist dann gegeben, wenn die extern zugeführte Leistung kleiner als ein zweiter Grenzwert ist, während ein zweiter Ladeabschnitt LA2 gegeben ist, wenn die extern zugeführte Leistung größer als ein zweiter Grenzwert ist. Dabei können der erste und der zweite Grenzwert gleich sein, sie können aber auch differieren. Die Auswertung kann anhand des Kurvenverlaufs direkt erfolgen, zusätzlich oder alternativ kann sie auch auf einem Algorithmus basierend durchgeführt werden.

Zweckmäßig ist es, wenn der Hochleistungsspeicher 6 während der flachen Verläufe der Entladestufen und Ladestufen, also in dem ersten Entladeabschnitt EA1 und dem ersten Ladeabschnitt LA1, nicht vollständig entladen bzw. aufgeladen wird, damit noch etwas Puffer für mögliche Leistungsabgaben und Leistungsaufnahmen gegeben ist. Als Beispiel hierfür sei die spitzenförmige Zunahme des Ladezustands am Ende der zweiten Entladestufe E2 genannt, bei welcher der Hochleistungsspeicher 6 kurz geladen werden kann, bevor er sich gemäß der folgenden steilen Flanke, also des zweiten Entladeabschnitt EA2 der zweiten Entladestufe E2 weitestgehend entlädt. Zudem können so vom angenommenen Ladezustandsprofil abweichende Verläufe abgefangen werden. Die Entladung sollte bevorzugt bis höchstens 20 % des Maximalladewerts erfolgen, während die Beladung bevorzugt bis höchstens 80 % des Maximalladewerts erfolgen sollte.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

### Bezugszeichenliste

- 1: Energiespeichereinrichtung
- 2: Teilspeichereinrichtung
- 3: Hochenergiespeicher
- 4: DC/DC-Wandler
- 5: Teilspeichervorrichtung
- 6: Hochleistungsspeicher
- 7: DC/DC-Wandler
- 8: DC-Bus
- 9: Energieverbraucher
- 10: Energieerzeuger
- 11: Steuerungseinrichtung
- 12: Steuerverbindung
- 13: Kommunkationsleitung
- EA1: Entladeabscnhtt
- EA2: Entladeabschnitt
- LA1: Ladeabschnitt
- LA2: Ladeabschnitt
- P1: Pfeil
- P2: Pfeil
- K: Kurve
- B1: Bereich
- B2: Bereich

- L1 - L3: Ladestufe
- E1 - E3: Entladestufe
- LP1 - LP3: Pfeil

## Patentansprüche

1. Verfahren zur Steuerung einer Energiespeichereinrichtung (1) umfassend wenigstens eine erste Teilspeichervorrichtung (2) in Form wenigstens eines Hochenergiespeichers (3) und wenigstens eine zweite Teilspeichervorrichtung (5) in Form wenigstens eines Hochleistungsspeichers (6), wobei die beiden Teilspeichervorrichtungen (2, 5) für einen bidirektionalen Energieaustausch miteinander verbunden sind, sowie eine den Betrieb der Energiespeichereinrichtung (1) steuernde Steuerungseinrichtung (11), wobei Energie bei extern benötigter Leistung entladen und Energie bei extern zugeführter Leistung geladen wird, **dadurch gekennzeichnet, dass** der Energieaustausch in Abhängigkeit eines vorbekannten oder prognostizierten Ladezustandsprofils, das zukünftige Entlade- und Ladevorgänge der Energiespeichereinrichtung (1) über die Zeit beschreibt, gesteuert wird.

2. Verfahren nach Anspruch 1, **dadurch gekennzeichnet, dass** im Ladezustandsprofil Entladestufen (E1, E2, E2) und Ladestufen (L1, L2, L3) ermittelt werden, wobei eine Entladestufe (E1, E2, E3) einen ersten Entladeabschnitt (EA1) und einen zweiten Entadeabschnitt (EA2) aufweist, wobei in dem ersten Entladeabschnitt (EA1) die extern benötigte Leistung geringer ist als in dem zweiten Entladeabschnitt (EA2) und wobei eine Ladestufe (L1, L2, L3) einen ersten Ladeabschnitt (LA1) und einen zweiten Ladeabschnitt (LA2) aufweist, wobei in dem ersten Ladeabschnitt (LA1) die extern zugeführte Leistung geringer ist als in dem zweiten Ladeabschnitt (LA2), wobei zumindest während eines Teils der Dauer eines ersten Entladeabschnitts (EA1) Energie von dem Hochenergiespeicher (3) an den Hochleistungsspeicher (6) übertragen wird, und zumindest während eines Teils der Dauer eines ersten Ladeabschnitts (LA1) Energie vom Hochleistungsspeicher (3) an den Hochenergiespeicher (6) übertragen wird.

3. Verfahren nach Anspruch 2, **dadurch gekennzeichnet, dass** im ersten Entladeabschnitt (EA1) die extern benötigte Leistung kleiner als ein erster Grenzwert ist, und im zweiten Entladeabschnitt (EA2) die extern benötigte Leistung größer als der erste Grenzwert ist, und dass im ersten Ladeabschnitt (LA1) die extern zugeführte Leistung kleiner als ein zweiter Grenzwert ist, und im zweiten Ladeabschnitt (LA2) die extern zugeführte Leistung größer als der zweite Grenzwert ist.

4. Verfahren nach Anspruch 3, **dadurch gekennzeichnet, dass** der erste und der zweite Grenzwert gleich sind.

5. Verfahren nach Anspruch 3 oder 4, **dadurch gekennzeichnet, dass** der Hochleistungsspeicher (6) in einem ersten Entladeabschnitt (EA1) nur auf einen oberhalb seines Minimalladewerts liegenden ersten Ladewert entladen wird, und/oder dass der Hochleistungsspeicher (6) in einem ersten Ladeabschnitt nur auf einen unterhalb seines Maximalladewerts liegenden zweiten Ladewert geladen wird.

6. Verfahren nach Anspruch 5, **dadurch gekennzeichnet, dass** der erste Ladewert wenigstens 10%, insbesondere wenigstens 20% des Maximalladewerts entspricht, und/oder dass der zweite Ladewert höchstens 90%, insbesondere höchstens 80% des Maximalladewerts entspricht.

7. Verfahren nach einem der vorangehenden Ansprüche, **dadurch gekennzeichnet, dass** die Energiespeichereinrichtung (1) Teil eines Fahrzeugs ist, wobei das vorbestimmten Ladezustandsprofil anhand von Navigationsdaten einer gewünschten Fahrstrecke bestimmt wird, oder anhand einer vorbekannten Fahrstrecke bestimmt wird.

8. Verfahren nach einem der Ansprüche 1 bis 6, **dadurch gekennzeichnet, dass** die Energiespeichereinrichtung (1) stationär ist, wobei das Ladezustandsprofil anhand der Betriebszeiten bekannter, temporär zu versorgender Verbraucher und/oder anhand von Wetterdaten, die ein Maß für die Erzeugung erneuerbarer Energie sind, bestimmt wird.

9. Energiespeichereinrichtung, umfassend wenigstens eine erste Teilspeichervorrichtung (2) in Form wenigstens eines Hochenergiespeichers (3) und wenigstens eine zweite Teilspeichervorrichtung (5) in Form wenigstens eines Hochleistungsspeichers (6), wobei ein die beiden Teilspeichervorrichtungen (2, 5) für einen bidirektionalen Energieaustausch miteinander verbunden sind, sowie eine den Energieaustausch steuernde Steuerungseinrichtung (11), die zur Durchführung des Verfahrens nach einem der vorangehenden Ansprüche eingerichtet ist.

10. Energiespeichereinrichtung nach Anspruch 9, **dadurch gekennzeichnet, dass** die Kapazität des Hochleistungsenergiespeichers (6) in Abhängigkeit der Höhe der höchsten Entladestufe (E1, E2, E3) oder Ladestufe (L1, L2, L3) ausgelegt ist.

11. Energiespeichereinrichtung nach Anspruch 9 oder 10, **dadurch gekennzeichnet, dass** sie Teil eines Fahrzeugs ist, oder dass sie ein stationärer Speicher ist.
